(19)

Europäisches
Patentamt
European
Patent Office
Office européen
des brevets

(11) **EP 2 775 427 A1**

(12) **EUROPEAN PATENT APPLICATION**

(43) Date of publication:
**10.09.2014 Bulletin 2014/37**

(51) Int Cl.:
***G06Q 10/00*** *(2012.01)*       ***G06Q 40/00*** *(2012.01)*

(21) Application number: **13158477.3**

(22) Date of filing: **08.03.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Erasmus University Centre for Contract Research and Business Support B.V.**
**3062 PA  Rotterdam (NL)**

(72) Inventors:
• **Fitzgerald Groenen, Patrick John**
  **2613 CG Delft (NL)**
• **van Knippenberg, Daniël Leon**
  **1019 JX Amsterdam (NL)**

• **de Haas, Marco**
  **5301 AG Zaltbommel (NL)**
• **Pieternel Porck, Jeanine**
  **3513 BD Utrecht (NL)**
• **Tarakci, Murat**
  **3039 PJ Rotterdam (NL)**
• **Yasin Ates, Nufer**
  **3011DJ Rotterdam (NL)**

(74) Representative: **Klinski, Robert**
**Patentship**
**Patentanwaltskanzlei**
**Elsenheimerstraße 65**
**80687 München (DE)**

(54) **Method for characterizing data sets**

(57)    The present invention relates to a method for characterizing a first data set of digital values and a second data set of digital values, the method comprising the steps of determining (S101) a first similarity measure indicating a similarity of the digital values within the first data set; determining (S102) a second similarity measure indicating a similarity of the digital values within the second data set; determining (S103) a correlation value on the basis of the first data set and the second data set; electronically outputting (S104) the correlation value, the first similarity measure and the second similarity measure.

Fig. 8

EP 2 775 427 A1

**Description**

The present invention relates to method for characterizing a first data set of digital values and a second data set of digital values.

In prior art it is difficult to characterize datasets of different kinds of objects which comprise a number of sets of objects in which the objects are related to each other.

It is the object of the present invention to provide a method for fast and easily characterizing data sets of objects.

This problem is solved by subject-matter according to the independent claim. Preferred embodiments of the present invention are subject of the dependent claims, the description and the figures.

According to a first aspect the problem is solved by a method for characterizing a first data set of digital values and a second data set of digital values, the method comprising the steps of determining a first similarity measure indicating a similarity of the digital values within the first data set; determining a second similarity measure indicating a similarity of the digital values within the second data set; determining a correlation measure on the basis of the first data set and the second data set; electronically outputting the correlation measure, the first similarity measure and the second similarity measure. The data sets can be assigned to technical objects, like screws, electronic components, cars or the like. The method can be applied for example for quality control purposes in manufacturing of products in different production facilities. In addition the datasets can be assigned to abstract objects like the degree of consensus or persons like customers. Electronically outputting can be done for example by writing the digitally represented measures into a digital storage, transmitting on a signal transmission line or displaying the measures on a screen.

In a preferred embodiment of the method the step of determining the first similarity measure comprises determining a first mean value of the digital values of the first data set, the first mean value forming the first similarity measure, or the step of determining the second similarity measure comprises determining a second mean value of the digital values of the second data set, the second mean value forming the second similarity measure.

In a further preferred embodiment of the method the digital values of the first data set or the digital values of the second data set are represented as vectors.

In a further preferred embodiment of the method the step of determining the first similarity measure comprises calculating a first vector sum of the vectors of the first data set, the first vector sum forming the first similarity measure, or the step of determining the second similarity measure comprises calculating a second vector sum of the vectors of the second data set, the second vector sum forming the second similarity measure.

In a further preferred embodiment of the method the step of determining the first similarity measure comprises calculating a first magnitude of the first vector sum, the first magnitude forming the first similarity measure or the step of determining the second similarity measure comprises calculating a second magnitude of the second vector sum, the second vector sum forming the second similarity measure.

In a further preferred embodiment of the method the step of determining the first similarity measure comprises dividing the first magnitude by the number of vectors in the first data set, the result forming the first similarity measure, or the step of determining the second similarity measure comprises dividing the second magnitude by the number of vectors in the second data set the result forming the second similarity measure.

In a further preferred embodiment of the method the step of determining a correlation measure is further based on a summary vector of the first data set and a summary vector of the second data set.

In a further preferred embodiment of the method the step of electronically outputting comprises displaying a distance between the first data set and the second data on the basis of the correlation measure.

In a further preferred embodiment of the method the step of electronically outputting comprises multidimensional scaling. Multidimensional scaling is a method that represents measurements of similarity or dissimilarity among pairs of objects as distances between points of a low-dimensional space.

In a further preferred embodiment of the method the step of electronically outputting comprises displaying a size of the first data set on the basis of the first similarity measure or displaying a size of the second data set on the basis of the second similarity measure.

In a further preferred embodiment of the method the method comprises the step of reducing a number of data in the first data set or reducing a number of data in the second data set.

In a further preferred embodiment of the method the step of reducing the number of data in the first data set or of reducing the number of data in the second data set comprises an unfolding method. An unfolding method is any method that approximates the data values between row and column entities by a computation between two summary vectors of the row entities and column entities.

In a further preferred embodiment of the method the unfolding method generates a set of object scores and a set of component loadings for each of the first and the second data sets and the steps of determining a first and a second similarity measure are based on the component loadings of each of the first and the second data set and the step of determining a correlation measure is based on the component scores of the first and the second data set. In a further preferred embodiment of the method the method comprises the step of determining a third similarity measure indicating a similarity of the digital values within a third data set.

In a further preferred embodiment of the method the method comprises the step of determining a correlation measure between the third data set of digital values and the first data set of digital values and a correlation measure between the third data set of digital values and the second data set of digital values.

Fig. 1 shows an example of a VMU biplot;

Fig. 2 shows a MDS solution depicting the locus and degree of between-group consensus;

Fig. 3 shows VMU biplots representing the degree and content of strategic consensus within two departments;

Fig. 4 shows a VMU biplot after a strategic intervention

Fig. 5 shows a Bi-plot visualizing the degree and content of a first team's consensus;

Fig. 6 shows a Bi-plot visualizing the degree and content of a seconds team's consensus;

Fig. 7 shows a MDS solution depicting the locus and degree of between-group consensus for two teams; and

Fig. 8 shows a block diagram of the method.

The method for characterizing data sets can be applied as a method for strategic consensus mapping.

Strategic Consensus Mapping SCM relies on data that quantify individuals', i.e., members of workgroups, teams, business units, or entire organizations, assessment of strategic priorities, for instance through rating or rank ordering potential strategic objectives, as they could be gathered in a survey. The SCM consists of a set of methodological procedures which aim to capture the facets of strategic consensus. The steps of the method are presented here in the same order as they would be executed.

In a first step the vector model for unfolding (VMU) is employed to measure the degree of within-group strategic consensus and to visualize its content. In a second step at least two similarity measures that operationalize the degree of within-group consensus and at least one correlational measure that operationalizes the degree of between-group consensus are determined from the results of this VMU. In a third step these quantified measures of within- and between-group consensus are electronically output as a basis for further processes, e.g. for visualizing the between-group consensus using multidimensional scaling MDS. In a fourth step the statistical significance of the observed differences in strategic within- and/or between-group consensus, both cross-sectional and longitudinal, are assessed with permutation tests. This can be used for visualizing the degree and the content of within-group strategic consensus

In order to simultaneously obtain a visual mapping for the content and a measure for the degree of strategic consensus, a vector model for unfolding is applied. This model corresponds to a principal component analysis (PCA) on a transposed data matrix which has respondents in the columns as variables and strategy items, i.e., strategic goals in the rows as cases.

This vector model provides a map that jointly plots the strategy items in relation to the respondents' preferences of these items for all members of a single team. In multivariate analysis, VMU is a widely applied statistical dimension reduction technique that summarizes a data set by one or more uncorrelated underlying latent variables accounting for as much of the variance of the respondents as possible. Below, the specifications of VMU are explained in more detail and some of its features are demonstrated via an example.

Let H be the data matrix with m rows (strategy items) and n columns (respondents). H is standardized such that all columns have a zero mean and a variance of 1. Then VMU in p dimensions is equivalent to minimizing the sum of squared errors $\|\mathbf{E}\|^2$ between H and the low dimensional representation XA', that is,

$$L_{VMU}(\mathbf{X}, \mathbf{A}) = \left\| \mathbf{H} - \mathbf{X}\mathbf{A}' \right\|^2 = \sum_{ij} e_{ij}^2,$$

where X is an *mxp* matrix of the object scores for the m rows on the first p components and A is an *nxp* matrix of component loadings. X is standardized to be orthogonal and has column variance 1 and the component loadings matrix A contains the correlations of the n respondents with p components X.

That is, VMU reduces the dimensionality of the data set to p dimensions. One the one hand the object scores in X contain the coordinates for each strategy item on these p dimensions, whereas on the other hand the component loadings in A are the correlations between object scores for each strategy item and the original variables.

VMU allows for finding a *p*-dimensional space that contains (a) a configuration of m objects that represent the strategy items, e.g. the content of the strategy, depicted as individual object points, and (b) a *p*-dimensional configuration of *n* vectors that represents the respondents within the group, in a way that the projections of all object points onto each vector correspond to the individual preferences on the strategy items of each respondent in the data set.

In two-dimensional space, the results of the VMU can be depicted by a biplot where the rows of **X,** i.e. the object scores of strategy items, are represented as points and the rows of **A,** i.e. the component loadings of respondents are represented as vectors.

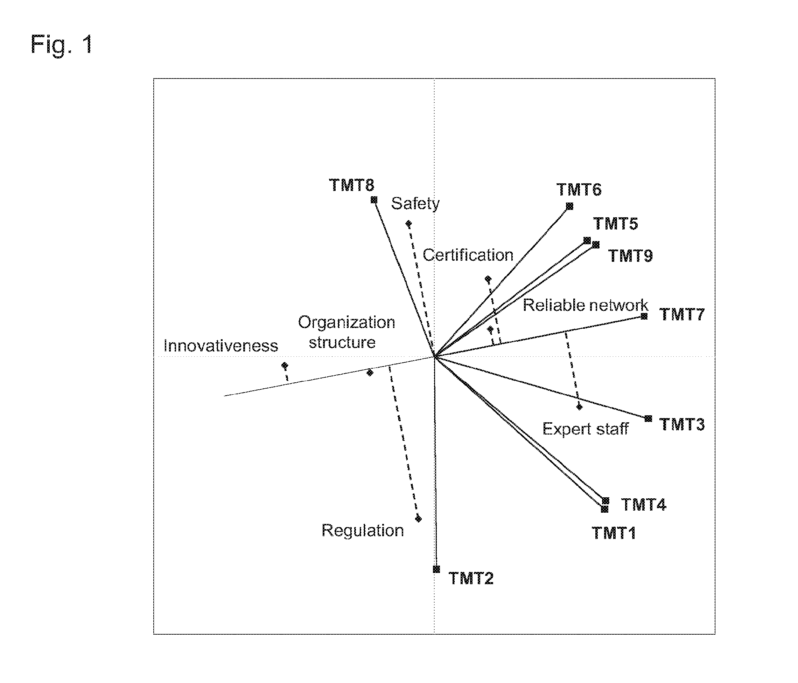

Fig. 1 illustrates several visual features that are associated with the resulting biplot representation of the VMU solution based on the following matrix:

| Strategic Priority | TMT1 | TMT2 | TMT3 | TMT4 | TMT5 | TMT6 | TMT7 | TMT8 | TMT9 |
| --- | --- | --- | --- | --- | --- | --- | --- | --- | --- |
| Safety | 1 | 2 | 3 | 2 | 5 | 6 | 4 | 7 | 5 |
| Certification | 4 | 1 | 4 | 3 | 6 | 5 | 5 | 2 | 7 |
| Expert staff | 7 | 6 | 7 | 7 | 7 | 4 | 7 | 3 | 6 |
| Regulation | 6 | 7 | 5 | 6 | 1 | 2 | 3 | 1 | 2 |
| Reliable network | 5 | 3 | 6 | 5 | 3 | 7 | 6 | 6 | 3 |
| Organization structure | 3 | 5 | 2 | 4 | 4 | 3 | 1 | 4 | 4 |
| Innovativeness | 2 | 4 | 1 | 1 | 2 | 1 | 2 | 5 | 1 |

In Fig. 1 the projections of the strategy items on respondent TMT7 of the group TMT are illustrated by dotted lines. Higher positive (negative) projection of an object point on the component vector representing TMT7 indicates higher (lower) prioritization for the respondent.

The cosine of the angle between two respondents in the biplot is an approximation of their pairwise correlation to interpret the magnitude of correlations. The correlation r is allowed to be represented as the cosine of an angle. Respondents with small angles between their vectors have a similar opinion on their valuation of strategy items. In Fig. 1 the goal prioritization of respondent 'TMT1' is very similar to that of respondent 'TMT4', but very different from respondent 'TMT8'. This feature can also be very useful in operationalizing the dyadic strategic consensus.

The spread of all vectors in this biplot demonstrates the degree of strategic within-group consensus. If the vectors are grouped as a narrow bundle, there is a high degree of within-group strategic consensus. However, if the vectors of the respondents are spread widely in opposing directions, there is a low degree of within-group consensus.

This biplot gives not only a comparison of respondents, but also how these respondents differ in their goals and consequently from a prototypical respondent. Furthermore, the orthogonal projection of a strategy item onto a respondent's vector indicates the rating of this particular strategy item by the respondent. A high positive projection of a strategy item, i.e. the projection onto the line through the vector furthest in its direction, indicates a high prioritization of the item by the respondent whereas a strategic item that is projected on the opposite direction indicates a low prioritization of the item the respondent.

The projections of strategy items are illustrated onto the respondent 'TMT7', which is shown with dotted lines in Fig. 1. The respondent 'TMT7' assesses 'Expert Staff' as most important since this goal has the largest projection on the vector representing respondent 'TMT7'. 'Expert Staff' is then followed by the items of 'Certification' and 'Reliable Network'. Since the item of 'Innovativeness' has the largest projection in the opposite direction, this item is valued the least by respondent 'TMT7'. By using a biplot the within-group strategic consensus is visualized in a way that it captures the 'content' and 'locus' (within-group) facets of multifaceted definition of consensus.

VMU makes it possible to quantify the group's opinion which can be additionally used to compare strategic consensus between groups. The dimensions in regular VMU and PCA are chosen to maximize the reconstructed variance, subject to being orthogonal to higher dimensions. However, the total variance accounted by two dimensions does not change under rotation of these two dimensions. Therefore, this freedom of rotation can be used to ensure that the average (vector) of component loadings coincides with the first dimension. By doing so, the first dimension can be interpreted as the *prototypical respondent* whose direction represents the overall group opinion the best. Thus, the projections of strategy items onto the first axis represent the overall view of the group by the prototypical respondent.

In Fig. 1, when the projections of the strategic goals onto the first dimension are made to attain the overall view of the group, it is observed that the prototypical respondent prioritizes the item of 'Expert Staff' the most, then the item of 'Certified Work Process' and the item of 'Reliable Networks'; whereas the item of 'Innovativeness' is prioritized as the least important goal of all by this group. Additionally, the number of respondents who are located close to the prototypical respondent represents scope of within group consensus.

Finally, the length of a vector indicates how well the respondent is represented such that a length of 1 indicates perfect fit with the raw data variable. The interpretation of the projections onto very short vectors as indicating low variance accounted for could be misleading.

Low variance is interpreted as an indication of very diverse opinions in that group and thus as low consensus. The first two dimensions of the VMU solution are often adequate to account for a large portion of the variance, providing that the number of variables and respondents are not high. In Fig. 1 all respondents fit well into two dimensions, because almost all respondents have vectors with a length close to one. Indeed, 79.5 percent of the variance in this example is accounted for by the first two dimensions.

Further a quantification of the degree of within-group strategic consensus can be performed for determining a similarity measure. For determining a similarity measure, i.e. a measure for assessing the degree of strategic consensus within groups, VMU component loadings of the group members can be used. In addition to complementing the visualization of the content and degree of consensus, the approach has methodological advantages. Because the similarity measure is a function of VMU, it does not hold any distributional assumptions and does not depend on the number of scale anchors. A possible similarity measure to assess the degree of within-group strategic consensus is defined by

$$\alpha = \sqrt{\sum_{s=1}^{2}\left(m^{-1}\sum_{j}a_{js}\right)^2},$$

where $\alpha_{js}$ is the $s$th component loading for respondent j ($j = 1, ..., n$). This similarity measure takes the first two principal components into account. The measure can geometrically be interpreted as the length of the averaged component loadings vector of the first and the second dimensions. The similarity measure $\alpha$ takes values between 0 and 1.

If all members of the group have very similar views on the strategy items and their vectors are adjacent to each other in a narrow bundle, then the similarity measure will be close to 1. If, in contrast, there is a wide spread of the vectors, such as rays evenly distributed on a circle, then the average component loadings will be close to zero, and the similarity measure is low. In Fig. 1 the value of the similarity measure is 0.55 indicating a moderate degree of within-group strategic consensus.

Further a quantification of the degree of between-group strategic consensus can be performed. To strategically align people in an organization, developing consensus on strategic priorities within each group is important but ensuring that there is a shared understanding of strategy across groups is also essential. The use of a correlation-based approach for measuring consensus across groups can be used, which are represented by different data sets.

Therefore, a correlational measure for the degree of between-group consensus can be applied which is derived from the within-group VMU object scores of the strategy items. Because the first principal axis can be interpreted as the prototypical respondent of the group representing the aggregate measure of the entire group's overall opinion, the correlation between the prototypical respondents of two groups captures the notion of between-group consensus for these two groups.

The correlation measure $r(A, B)$ can be operationalized as the correlation of the object scores of the strategy items on the first principal component between two groups (A and B). An $r(A, B)$ of 1 indicates perfect sharedness over the strategy items by the two groups, whereas $r(A, B) \approx 0$ represents no strategic consensus between the two groups, whereas $r(A, B) \approx -1$ reveals two opposite understandings of the strategy in the two groups.

Moreover, the correlation measure can also be applied to measure the overall strategic alignment in an organization when all groups in the organization in question were surveyed, by using an aggregated index of the degree of between-group strategic consensus for all possible pairs of groups within the organization. This $r_{overall}$ can be operationalized as the normalized sum of squared $r$-measures for all pairs such that the index ranges between 0 and 1. Thus, it indicates the overall degree of strategic consensus between all groups in an organization. The $r_{overall}$ index can also be used to compare strategic alignment between different organizations.

Further a visualizing the degree and locus of between-group strategic consensus can be performed. In addition to within-group consensus visualization that captures the content and the locus of within-group consensus, a visualization technique for between-group strategic consensus can be applied. The between-group visualization is a map that represents all the groups in the organization in a two dimensional space according to their respective level of between-group consensus. It demonstrates which groups are located closely together and thus share a strategic understanding, thus allowing to determine the *locus* of consensus between groups.

In order to obtain a mapping for between-group consensus, a classical multidimensional scaling (MDS) can be used which has been proposed to help understand people's judgments on the similarity of the members of a set of objects. This technique can also be applied to visualizing intra- and intergroup similarities and differences in cognitive representations.

The main objective of MDS is to represent given measures of dissimilarity between all pairs of objects as distances between pairs of points in a low dimensional space such that the distances correspond as closely as possible to the proximities.

As measure of dissimilarities between two groups, one minus the correlations between two groups' object scores of the strategy items is used, i.e. the $r$ measures for all possible pairs of groups. In this case the correlation measure is a correlation value as defined as the Pearson correlation in statistics. Dependent upon the form of the data collected by the researcher, other dissimilarity or correlation measures such as (squared) Euclidean distances, city-block, and Minkowski can be employed as a rough correlation measure.

MDS finds an optimal representation of the between-group $r$ measures by distances in two-dimensional space. For dissimilarities that are Euclidean embeddable such as 1 - r, classical MDS has the property that the produced distances between points always underestimate the dissimilarity. So the resulting MDS plot is conservative and produces a lower bound of the dissimilarity or, equivalently, an upper bound of the correlation between two groups.

Other forms of MDS exist, such as least-squares MDS minimizing Stress that provide a two-sided approximation of the dissimilarities. However, when the number of groups is not high, solutions tend not to differ much. If the number of groups is high, e.g., in an industry-wide application, a classical MDS can be performed first, and it is used as an initial configuration to least-squares MDS.

Hence, each group is represented as a point and the distances between points represent their respective between-group consensus. Groups that have a more similar valuation of the strategy items are thus grouped close together, whereas groups with opposing views are placed far away from each other on the MDS map.

To provide a larger perspective on the strategic consensus between organizational groups, some additional features can be added to the between-group consensus maps. First, each group is represented not only by a single point in the two dimensional space - as in any MDS plot - but via a bubble which size represents the current degree of within-group consensus determined by the similarity measure ($\alpha$ measure), and via an outer-circle surrounding the bubble which indicates the potential maximum size of the bubble. When there is perfect consensus within that group the similarity measure and the maximum size of the bubble is 1.

Second, the representation the aforementioned TMT group is positioned as a bubble in the center of the MDS plots. Although any group can arbitrarily be chosen as the center reference, the group TMT is selected because they are the formal owners of organizational strategies. Depending upon the focal research question at hand, other groups or various stakeholders, e.g., trades unions, consumers, shareholders, and external regulators, can be taken as the center reference. Third, in order to make the mappings more comparable and insightful about the proportions, ten circles are plotted that correspond to correlations with the TMT ranging from 0.9 to 0.

Further an assessing of the statistical significance of differences in strategic consensus can be performed. Testing changes in strategic consensus over time, e.g., before and after a strategic intervention, or differences in strategic consensus between groups requires determining the statistical significance of the difference in the degree of consensus. To provide significance tests of such differences, the respective $\alpha_{diff}$ or $r_{diff}$ values need to be defined. For instance, if there is interest in whether there has been a significant change in the within-group consensus of a group over time, then the null hypothesis is formed as $\alpha_{diff} = 0$, where $\alpha_{diff} = \alpha_{post} - \alpha_{pre}$. In a similar vein, if there is interest in whether group A has a higher within-group consensus than group B, then the null hypothesis becomes $\alpha_{diff} \leq 0$, where $\alpha_{diff} = a_A - \alpha_B$ against the alternative hypothesis that $\alpha_{diff} > 0$.

Consensus across groups can be compared by a series of Ftests to compare within-group agreement between two or more groups. The procedure is parametric, and thus can be sensitive to deviations from normal distribution.

In contrast VMU is a non-parametric technique without a statistical error model, and the within- and between-group consensus measures are functions of the VMU results. The same holds for the distributions of $\alpha_{diff}$ or $r_{diff}$ for which no standard statistical theory is available. Therefore, the permutation test as a nonparametric method of hypothesis testing is better suited.

The permutation test produces the distribution of any test statistic for two groups under the null hypothesis of no difference between the two groups by calculating all or a high number of possible values of the test statistic with the rearrangements of the labels on the observed data.

The permutation test compares the $\alpha_{diff}$ and $r_{diff}$ values of the true groups with the $\alpha_{diff}$ and $r_{diff}$ values which are obtained from a large number of data sets, e.g., $N = 1000$, where the grouping information is destroyed and individuals are randomly assigned to one of the groups. To make sure that the group size remains the same, the array indicating the group number of the individuals is randomly permuted, and the new random group memberships are assigned for each permutation data set. In order to determine the significance, the p-value of the observed $\alpha_{diff}$ and $r_{diff}$ are determined by their percentiles with respect to the permutation distribution. If the null hypothesis of no difference is rejected, then the observed $\alpha_{diff}$ or $r_{diff}$ is significant at the level of the $p$-value.

For a further understanding of the method for characterizing data sets a practical example is given for a number of teams with data from a large Western European service provider company.

The company is composed of a top management team (TMT) and nine functional departments where each department has several sub-departments. The head of each department directs a management team composed of four to ten managers, who in turn supervise at least one sub-department. The TMT of the company includes the managing director and the heads of the nine functional departments. To assess the strategic alignment of the organizational units, the focus lies on the management teams of these nine departments and the TMT. In the subsequent departmental analyses, TMT members can be included in their respective departments as well.

Rather than employing generic strategic goal statements, the TMT provided strategic goals specific to this company. These goal statements included strategic ends (where to go) and strategic means (how to get there), which is a distinction commonly used in strategic consensus. These strategic goals were presented to 72 top and middle managers of the organization and the respondents were instructed as follows: 'Please rank the following strategic goals of your company from most important to least important'.

The strategic priorities are provided by the TMT and later simply ranked by the respondents, 64 responses were received for a response rate of 89 percent.

Higher variance in consensus was observed on strategic means, since the focus lied on strategic means. Due to confidentiality, some of the company-specific department names were relabeled, and names of the respondents were anonymized. Furthermore, only shortened versions of the seven strategic means of the company which read as 'Innovativeness', 'Regulation Framework', 'Reliable Network', 'Safety', 'Expert Staff', 'Organization Structure', and 'Certification' were used.

The results are presented in a different ordering than the methodology section, from a large (organization wide) to a smaller perspective (teams and individuals). This way of looking at the results provides a better understanding of the organization and enables to make more efficient interpretations of consensus and alignment in the organization, even when the order in which these results are produced is as described in the previous section. Further the locus and degree of between-group strategic consensus is determined.

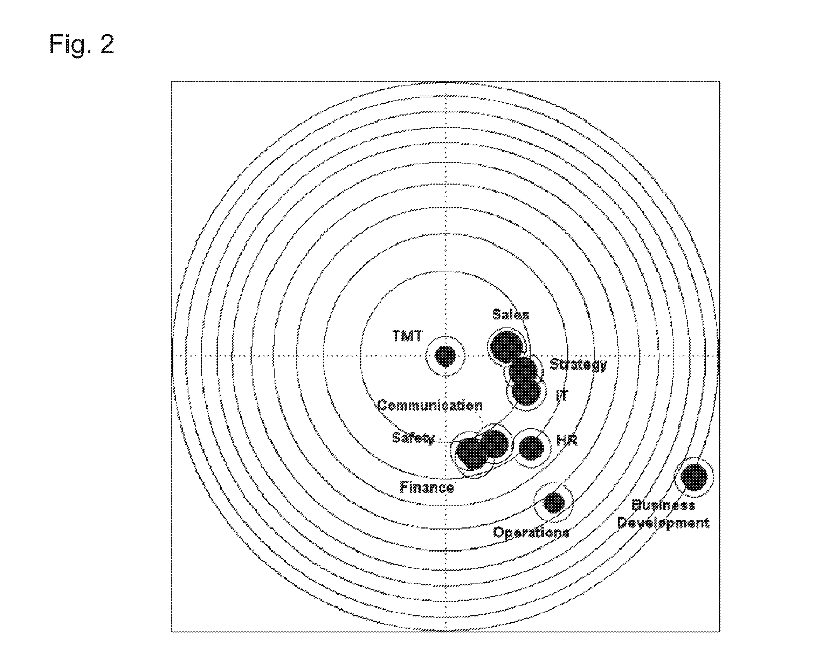

Fig. 2 shows the MDS plot that visualizes the strategic alignment of all organizational units in n the organization. The distances between the bubbles represent the degree of consensus between the organizational units: the smaller the distance, the larger the consensus between the groups. The TMT is placed at the center of the plot to spot the locus of the consensus more easily.

The distance matrix between departments used for the MDS solution in Fig. 2 is.

| | 1. | 2. | 3. | 4. | 5. | 6. | 7. | 8. | 9. | 10. |
|---|---|---|---|---|---|---|---|---|---|---|
| 1. TMT | 0 | | | | | | | | | |
| 2. Strategy | 0.57 | 0 | | | | | | | | |
| 3. HR | 0.59 | 0.43 | 0 | | | | | | | |
| 4. Sales | 0.27 | 0.09 | 0.39 | 0 | | | | | | |
| 5. Operations | 1.18 | 0.51 | 0.33 | 0.76 | 0 | | | | | |
| 6. Finance | 0.53 | 0.36 | 0.24 | 0.40 | 0.36 | 0 | | | | |
| 7. IT | 0.42 | 0.18 | 0.11 | 0.12 | 0.48 | 0.30 | 0 | | | |
| 8. Business Development | 2.05 | 1.34 | 0.84 | 1.47 | 0.79 | 1.40 | 1.09 | 0 | | |
| 9. Communication | 0.45 | 0.25 | 0.10 | 0.27 | 0.25 | 0.07 | 0.12 | 1.20 | 0 | |
| 10. Safety | 0.29 | 0.58 | 0.26 | 0.45 | 0.55 | 0.19 | 0.37 | 1.37 | 0.17 | 0 |

It is observed that the Sales, Strategy, and IT departments have a high shared understanding with the TMT on the strategic means since they are all positioned close to the TMT, whereas the views of the Operations and Business Development departments are barely aligned with the views of the TMT, as they are located further away. The degree of between-group consensus also shows these relations, for instance $r$(TMT, Sales) = 0.86 and $r$(TMT, Operations) = 0.41.

Distances between bubbles represent the degree of between-group consensus so that smaller distances represent higher between-group consensus. The size of a bubble represents within-group consensus. The circles around the bubbles indicate the potential size of the shaded-circle where complete consensus exists.

The bubbles represent the degree of within-group consensus of each department and circles around bubbles indicate the potential size of a bubble when there is full consensus within the group on the importance of all strategic means within the group ($\alpha$ = 1). Sales, Communication, and IT departments have relatively larger bubbles ($\alpha$ measures/similarity measures are 0.81, 0.79, and 0.73 respectively), contrary to Operations, TMT, and Finance that have smaller ones ($\alpha$ measures are 0.53, 0.54, and 0.56 respectively).

The degree of within-group consensus is interpreted combination with the distance of the departments to the center. In summon they indicate the locus of consensus in the organization. If organizational units which have high degrees of within-group consensus are clustered further away from the TMT, this shows that the locus of consensus is not the TMT for that organization. Similarly, number of groups close to this locus indicates the scope of the consensus in the organization. The TMT has a relatively low degree of within-group consensus, and some of the departments with high degrees of within-group consensus formed two clusters away from the TMT, which indicates that the locus of consensus may not be the TMT's view of the strategic means. Each department has a separate perception about the best way to reach organizational goals (strategic means), and that view is very different from what the TMT thinks, especially for some of the teams such as Business Development and Operations.

Further the content and degree of within-group strategic consensus is determined. To investigate these separate views that cause the shifted locus each management team is investigated. The VMU step provides biplots for each team, where the views of each individual team member on the strategic means are depicted. The biplot of the TMT was already provided as an example in Fig. 1.

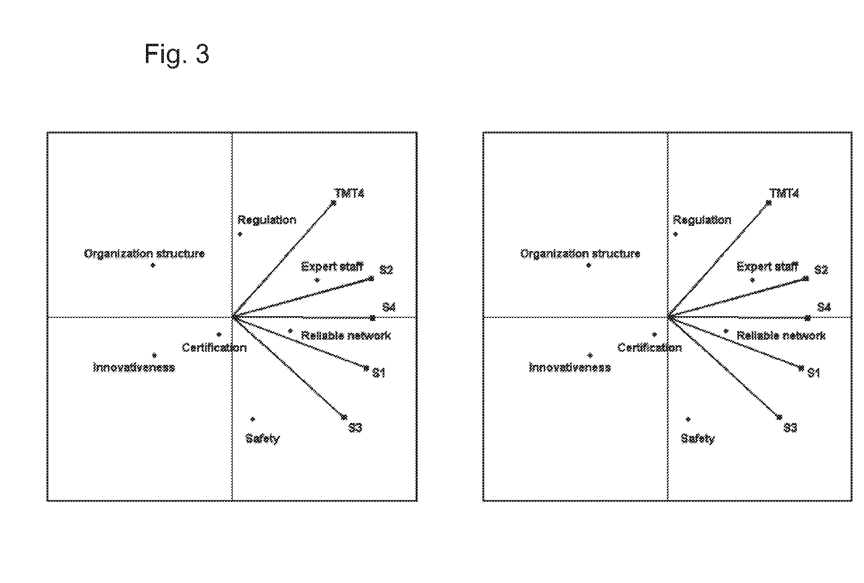

Fig. 3 illustrates biplots of two further teams, one team closer to and one team further away from the TMT, namely Sales and Operations. The stability of the respondents in the PCA solutions was investigated, i.e. if slight changes in the data would lead to drastically different representations, using bootstrap method for resampling. The results did not reveal any violations of the stability.

As the projections of the strategy items on the first principal component corresponds with the best representation of the overall view of the group, i.e. the view of the prototypical respondent, the differences in the views can be examined that cause the divergence. Based on the projections of the strategy items on the first axis in Fig. 1 and Fig. 3, it can be seen that the TMT values 'Expert Staff', 'Certification', and 'Reliable Network' as the top three strategic means. The Operations department which is located quite far away from the TMT in Fig. 2 values 'Safety' as the most and 'Certification', 'Innovativeness', and 'Regulation' as the least important strategic means. Hence this contradiction in the content causes a low degree of between-group consensus with the TMT, making the Operations department located apart from the TMT in Fig. 2. On the other hand, the Sales department values 'Expert Staff' and 'Reliable Network' as the most, and 'Innovativeness' and 'Organization Structure' as the least important strategic means, exactly as the TMT does. Consequently it has a high between-group consensus with the TMT. Thus it is depicted close to the TMT in Fig. 2.

A detailed look at the individual managers in Sales and Operations shows that the respondent vectors of the Sales department are grouped as a narrower bundle compared to the Operations department; thus the degree of within-group consensus of Sales (0.81) is higher than that of Operations (0.53). Consequently, the members of Sales indeed hold a more similar view about the relative importance of the strategic means than the members of Operations.

The large spread of the vectors in the Operations department is caused by differences in the individual preferences of the team members as seen in Fig. 3. For instance, respondent 'Op4' prioritizes 'Regulation', 'Reliable Network' and 'Innovativeness' as the most important strategic means, while respondent 'Op3' considers these three strategic means as the least important ones and 'Safety', 'Organization Structure' and 'Certification' as the most important ones. However, there are some team members who share similar views, such as the manager of the Operations department 'TMT5' and 'Op3' since the angle between them is small. Finally, it is shown that the length of vectors of respondents 'TMT5' and 'Op5' are slightly shorter than the rest which all have a length of approximately 1. This means that their preferences are somewhat worse represented in the biplot compared to those of the others. Indeed, two dimensions account for 66 percent of the variance indicating that the preferences for some members are not perfectly reconstructed in these dimensions. The members of the Sales department hold a stronger shared understanding on strategic means and all are represented adequately in the biplot having lengths very close to 1 since 90 percent of the variance is accounted for by the biplot.

Further the statistical significance of differences in between-group strategic consensus is assessed. Both the biplot and the similarity measures ($\alpha$-measures) indicate that Sales has a higher degree of within-group strategic consensus than Operations. However, so far it is not known whether this difference is statistically significant or not. For analyzing this a permutation testing procedure is applied that explores the null hypothesis of no difference in the degree of within-group strategic consensus of Sales and Operations, that is, $H_0$ equals $\alpha_{diff}$ = 0. After 9999 permutations, the observed difference of $\alpha_{diff}$ = 0.83 - 0.53 = 0.28 was at the 98th percentile implying p = 0.02. Therefore, the null hypothesis of no difference of within-group strategic consensus between Sales and Operations is rejected at the five percent level.

The evidence in favor of the validity can be judged by comparing the result with other common consensus measures such as the standard deviation, squared Euclidean distances. In the following table listing permutation tests for comparison of within-group consensus between Sales and Operations departments it is shown that the results remain qualitatively the same.

| Measures | Sales | Operations | Difference | p-value |
|---|---|---|---|---|
| $\alpha$ | 0.8141 | 0.5291 | 0.2850 | 0.0201 |
| Standard deviations | -1.2231 | -1.8147 | 0.5915 | 0.0097 |
| Squared Euclidean distance | -23.6 | -47.0667 | 23.4667 | 0.0236 |
| Correlations | 0.5786 | 0.1595 | 0.4190 | 0.0236 |

The permutation test can also be used to test whether two groups have a different correlation with the TMT, for example, $r_{diff} = r$(TMT, Sales) - $r$(TMT, Operations). The results show that this difference was significant at the 10 percent level ($p = 0.08$), but not at the five percent level. Consequently there is some evidence albeit not very strong that the Sales department is indeed more aligned with the TMT compared to the alignment of Operations with the TMT. Sales is closer to the TMT than Operations.

Further, the effectiveness of the strategic intervention is assessed. The visual features of the method make results more understandable. They were especially surprised by the low within-group consensus of their own team, the TMT, on the strategic means. Consequently, they decided to organize a semi-structured half-day strategic intervention facilitated by a professional consultant and an academic. The intervention was aimed to enhance their shared understanding on the strategic means.

After this strategic intervention, the prioritizations of TMT members were recollected, with the aim to measure the effectiveness of the strategic intervention to illustrate this particular application of the SCM.

Post measurement showed that the degree of within-group consensus of the TMT increased after the intervention ($\alpha_{post} = 0.81$), compared to the degree of consensus before the intervention ($\alpha_{pre} = 0.55$). Therefore, the null hypothesis that there is no difference in the degree of consensus between pretest and posttest, was tested against to the alternative that the consensus has increased. The results showed that the degree of consensus increased significantly at the 5 percent level from pretest to posttest ($p = 0.04$).

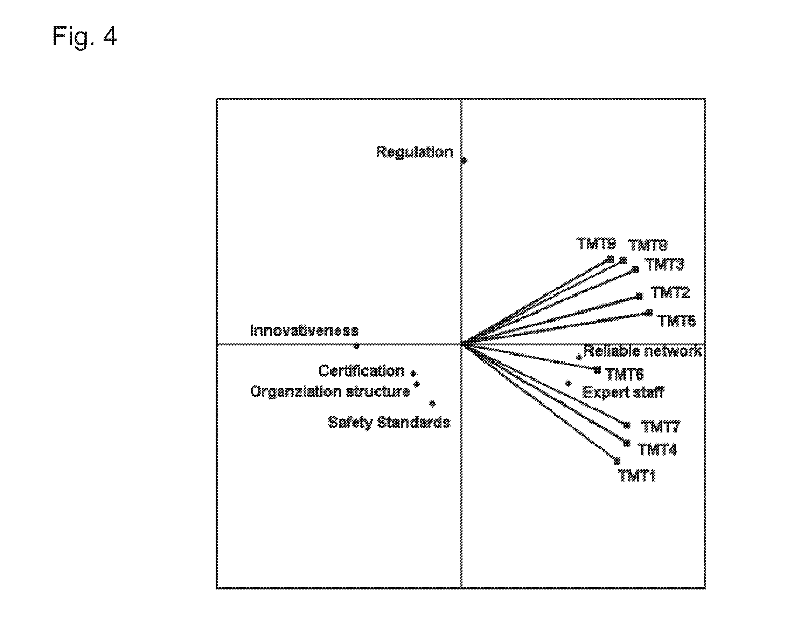

Fig. 4 shows the content of the consensus. Compared to the biplot in Fig. 1, a higher consensus is observed for high valuation of 'Reliable Network' and 'Expert Staff', whereas the TMT agrees on lower importance of 'Innovativeness'. Thus, the application of the SCM shows that the strategic intervention has been effective in increasing the degree of consensus on the desired content for the TMT in this organization.

Clearly, more rigorous research designs than the one presented here for illustrative purposes can be used to comprehensively assess the effectiveness of strategic interventions - the present discussion is for illustration only and the data presented here are not intended to make a contribution in and of themselves. A more appropriate design could for instance be a two-group pretest-posttest design comparing the effects of the intervention in contrast with a control group.

The method for characterizing datasets is applied on Strategic Consensus Mapping (SCM) to quantify the degree of consensus not only within but also between groups, to visually inspect the content of consensus within a group and alignment between groups, and to test whether longitudinal or cross-sectional differences in the degree of within-group and between-group consensus are significant. The potential of SCM is illustrated in a field study which also includes a strategic intervention, responding to the call to advance the methodological tools to test the effectiveness of strategic interventions.

Each step of SCM is complementary in such a way that the output of one procedure is input for the subsequent one. First, the vector model for unfolding (VMU) generates a within-group visualization of the degree and content of consensus, quantifies the degree of within-group consensus, and produces the prototypical group member which is an input for the between-group consensus measure.

The between-group measure then serves as input for multidimensional scaling, which visualizes the degree and locus of between-group consensus. The final step, permutation testing, utilizes the difference of within- and between-group measures to assess the significance of differences in strategic consensus.

The core contribution of the SCM is the enhanced possibilities it provides to research in strategic management for more fine-grained and extended analysis of strategic consensus within groups as well as between groups. In doing so, it complements earlier conceptual arguments regarding the multifaceted nature of strategic consensus by providing the methodological tools needed to follow up with empirical studies. With these tools to operationalize the different facets of strategic consensus in place, future research can explore the antecedents of consensus formation, the link between different facets of within-group consensus and group performance, the effect of between-group alignment on organizational performance, as well as derive visualizations of consensus and statistical tests of differences in consensus in an integrative approach that relies on the same raw input and thus does not confound aspects of consensus with the specifics of their measurement. In sum, SCM contributes to the development of an understanding of the role of strategic consensus in the strategy process.

Ordinal data should to be treated with care when employing the SCM. In this case, 'ordinary' VMU, i.e. PCA, can be replaced by Categorical Principal Component Analysis (CatPCA). Both provide a similar output and the overall the differences between CatPCA and PCA are mostly negligible, but CatPCA is the more appropriate technique for ordinal data. The two fundamental procedures of SCM, VMU and MDS, are based on the idea of representing multivariate data in lower dimensions. By their very nature they search for low dimensional representations that show the most important but not all information. The advantage is that noise and unimportant relations tend to be removed from the representation. At the same time, they also may lose some information that could only be visible in higher dimensions. This may be so for VMU solutions for a long list of strategy items or groups with many members. However both situations are unlikely in strategic consensus research. The two dimensional MDS solution showing the similarity of the groups will become more of a compromise as the number of groups grows. For large organizations with many organizational units, this situation could occur. Yet bad-fitting groups can be easily detected by checking the MDS diagnostics. The between-group measures and their significance can provide a valuable support of the visual representation of the MDS map in these cases.

For a more principal understanding of the method for characterizing data sets a basic numerical example is given for the minimal number of two teams each of which is represented by a separate data set.

Step 1: Collect ranking data on strategy items among the members of the first team (team1), such that strategy items are in the matrix columns thus representing the variables, and team1 members are in the matrix rows thus representing the objects

Output: *ranking_data_matrix1*

Example:

| *ranking_data_matrix1* | | | | | | | |
|---|---|---|---|---|---|---|---|
| Strategy items | | | | | | | |
| Team members | Item1 | Item2 | Item3 | Item4 | Item5 | Item6 | Item7 |
| Memb1 | 1 | 2 | 3 | 4 | 5 | 6 | 7 |
| Memb2 | 3 | 2 | 1 | 5 | 6 | 4 | 7 |
| Memb3 | 4 | 5 | 3 | 2 | 1 | 6 | 7 |
| Memb4 | 7 | 6 | 1 | 2 | 3 | 4 | 5 |
| Memb5 | 4 | 6 | 7 | 3 | 1 | 2 | 5 |
| Memb6 | 3 | 2 | 1 | 7 | 6 | 5 | 4 |

Step 2: Collect ranking data on strategy items among the members of the second team (team2), such that strategy items are in the matrix columns thus representing the variables, and team2 members are in the matrix rows thus representing the objects

Output: *ranking_data_matrix2*

Example:

| *ranking_data_matrix2* | | | | | | | |
|---|---|---|---|---|---|---|---|
| Strategy items | | | | | | | |
| Team members | Item1 | Item2 | Item3 | Item4 | Item5 | Item6 | Item7 |
| Memb1 | 6 | 7 | 1 | 2 | 3 | 4 | 5 |
| Memb2 | 7 | 4 | 5 | 6 | 1 | 2 | 3 |
| Memb3 | 2 | 3 | 3 | 2 | 1 | 5 | 4 |
| Memb4 | 7 | 5 | 2 | 1 | 3 | 6 | 4 |
| Memb5 | 4 | 5 | 2 | 3 | 6 | 1 | 7 |
| Memb6 | 7 | 6 | 5 | 4 | 3 | 1 | 2 |
| Memb7 | 6 | 7 | 1 | 3 | 2 | 4 | 5 |

Step 3: Reverse and transpose *ranking_data_matrix1,* such that team1 members are in the matrix columns thus representing the variables, and strategy items are in the matrix rows thus representing the objects

Output: *transposed_data_matrix1*

Example:

| *transposed_data_matrix1* | | | | | | |
|---|---|---|---|---|---|---|
| Team members | | | | | | |
| Strategy items | Memb1 | Memb2 | Memb3 | Memb4 | Memb5 | Memb6 |
| Item1 | 7 | 5 | 4 | 1 | 4 | 5 |
| Item2 | 6 | 6 | 3 | 2 | 2 | 6 |
| Item3 | 5 | 7 | 5 | 7 | 1 | 7 |
| Item4 | 4 | 3 | 6 | 6 | 5 | 1 |
| Item5 | 3 | 2 | 7 | 5 | 7 | 2 |

(continued)

| *transposed_data_matrix1* | | | | | | |
|---|---|---|---|---|---|---|
| Team members | | | | | | |
| Strategy items | Memb1 | Memb2 | Memb3 | Memb4 | Memb5 | Memb6 |
| Item6 | 2 | 4 | 2 | 4 | 6 | 3 |
| Item7 | 1 | 1 | 1 | 3 | 3 | 4 |

Step 4: Reverse and transpose *ranking_data_matrix2,* such that team2 members are in the matrix columns thus representing the variables, and strategy items are in the matrix rows thus representing the objects
Output: *transposed_data_matrix2*
Example:

| *transposed_data_matrix2* | | | | | | | |
|---|---|---|---|---|---|---|---|
| Team members | | | | | | | |
| Strategy items | Memb1 | Memb2 | Memb3 | Memb4 | Memb5 | Memb6 | Memb7 |
| Item1 | 2 | 1 | 6 | 1 | 4 | 1 | 2 |
| Item2 | 1 | 4 | 5 | 3 | 3 | 2 | 1 |
| Item3 | 7 | 3 | 5 | 6 | 6 | 3 | 7 |
| Item4 | 6 | 2 | 6 | 7 | 5 | 4 | 5 |
| Item5 | 5 | 7 | 7 | 5 | 2 | 5 | 6 |
| Item6 | 4 | 6 | 3 | 2 | 7 | 7 | 4 |
| Item7 | 3 | 5 | 4 | 4 | 1 | 6 | 3 |

Step 5: Reduce dimensionality of *transposed_data_matrix1* to two principal components (by using PCA/VMU)
Output: - *component_loadings_matrix1* (loadings for all team1 members)
   - *object_scores_matrix1* (scores for all strategy items
Example:

| *component_loadings_matrix1* | | |
|---|---|---|
| Team members | dimension 1 | dimension 2 |
| Memb1 | -0.7315 | 0.3981 |
| Memb2 | -0.8711 | 0.3450 |
| Memb3 | 0.2078 | 0.9333 |
| Memb4 | 0.2602 | 0.6767 |
| Memb5 | 0.8478 | 0.1142 |
| Memb6 | -0.9351 | -0.1336 |

| *object_scores_matrix1* | | |
|---|---|---|
| Strategy items | dimension 1 | dimension 2 |
| Item1 | -0.3014 | -0.0721 |
| Item2 | -0.4727 | -0.1496 |
| Item3 | -0.4857 | 0.4216 |
| Item4 | 0.3442 | 0.3913 |
| Item5 | 0.4898 | 0.3461 |
| Item6 | 0.2319 | -0.2656 |
| Item7 | 0.1939 | -0.6718 |

Step 6: Reduce dimensionality of *transposed_data_matrix2* to two dimensions i.e. two principal components (by using PCA/VMU)

Output: - *component_loadings_matrix2* (loadings for all team2 members)
 - *object_scores_matrix2* (scores for all strategy items)
Example:

| component_loadings_matrix2 | | |
| --- | --- | --- |
| Team members | dimension 1 | dimension 2 |
| Memb1 | 0.9754 | 0.1401 |
| Memb2 | 0.2313 | -0.7800 |
| Memb3 | 0.1483 | 0.7522 |
| Memb4 | 0.8176 | 0.2892 |
| Memb5 | 0.331 | -0.0129 |
| Memb6 | 0.4248 | -0.8570 |
| Memb7 | 0.9654 | 0.0664 |

| object_scores_matrix2 | | |
| --- | --- | --- |
| Strategy items | dimension 1 | dimension 2 |
| Item1 | -0.5246 | 0.4373 |
| Item2 | -0.5088 | 0.0605 |
| Item3 | 0.4813 | 0.2471 |
| Item4 | 0.3525 | 0.3558 |
| Item5 | 0.2995 | -0.0343 |
| Item6 | 0.0379 | -0.6876 |
| Item7 | -0.1377 | -0.3789 |

Step 7:Reflect *component_loadings_matrix1* such that the majority of component loadings is positively signed, and adjust *object_scores_matrix1* accordingly
Output: - *component_loadings_matrix1_reflected* (loadings for all team1 members)
 - *object_scores_matrix1_reflected* (scores for all strategy items
Example:

| component_loadings_matrix1_reflected | | |
| --- | --- | --- |
| Team members | dimension 1 | dimension 2 |
| Memb1 | -0.7315 | 0.3981 |
| Memb2 | -0.8711 | 0.3450 |
| Memb3 | 0.2078 | 0.9333 |
| Memb4 | 0.2602 | 0.6767 |
| Memb5 | 0.8478 | 0.1142 |
| Memb6 | -0.9351 | -0.1336 |

| object_scores_matrix1_reflected | | |
| --- | --- | --- |
| Strategy items | dimension 1 | dimension 2 |
| Item1 | -0.3014 | -0.0721 |
| Item2 | -0.4727 | -0.1496 |
| Item3 | -0.4857 | 0.4216 |
| Item4 | 0.3442 | 0.3913 |
| Item5 | 0.4898 | 0.3461 |
| Item6 | 0.2319 | -0.2656 |
| Item7 | 0.1939 | -0.6718 |

Step 8:Reflect *component_loadings_matrix2* such that the majority of component loadings is positively signed, and adjust *object_scores_matrix2* accordingly
Output: - *component_loadings_matrix2_reflected* (loadings for all team2 members)
    - *object_scores_matrix2_reflected* (scores for all strategy items)
Example:

| *component_loadings_matrix2_reflected* | | |
|---|---|---|
| Team members | dimension 1 | dimension 2 |
| Memb1 | 0.9559 | 0.2395 |
| Memb2 | 0.3102 | -0.7521 |
| Memb3 | 0.0703 | 0.7635 |
| Memb4 | 0.7836 | 0.3716 |
| Memb5 | 0.3306 | 0.0212 |
| Memb6 | 0.5106 | -0.8088 |
| Memb7 | 0.9535 | 0.1652 |

| *object_scores_matrix2_reflected* | | |
|---|---|---|
| Strategy items | dimension 1 | dimension 2 |
| Item1 | -0.5246 | 0.4373 |
| Item2 | -0.5088 | 0.0605 |
| Item3 | 0.4813 | 0.2471 |
| Item4 | 0.3525 | 0.3558 |
| Item5 | 0.2995 | -0.0343 |
| Item6 | 0.0379 | -0.6876 |
| Item7 | -0.1377 | -0.3789 |

Step 9:Rotate *component_loadings_matrix1_reflected* such that the average component loading on the second principal component equals zero, and adjust *object_scores_matrix1_reflected* accordingly
Output: - *component_loadings_matrix1_rotated* (loadings for all team1 members)
    - *object_scores_matrix1_rotated* (scores for all strategy items)
Example:

| *component_loadings_matrix1_rotated* | | |
|---|---|---|
| Team members | dimension 1 | dimension 2 |
| Memb1 | 0.692 | 0.4634 |
| Memb2 | 0.7097 | 0.6117 |
| Memb3 | 0.7304 | -0.617 |
| Memb4 | 0.4788 | -0.5444 |
| Memb5 | -0.2921 | -0.804 |
| Memb6 | 0.3154 | 0.8904 |
| Average | | 0.0000 |

| *object_scores_matrix1_rotated* | | |
|---|---|---|
| Strategy items | dimension 1 | dimension 2 |
| Item1 | 0.076 | 0.3004 |
| Item2 | 0.0868 | 0.4882 |
| Item3 | 0.5988 | 0.2347 |
| Item4 | 0.187 | -0.4864 |

(continued)

| object_scores_matrix1_rotated | | |
|---|---|---|
| Strategy items | dimension 1 | dimension 2 |
| Item5 | 0.0794 | -0.5945 |
| Item6 | -0.3428 | -0.0822 |
| Item7 | -0.6851 | 0.1398 |

Step 10: Rotate *component_loadings_matrix2_reflected* such that the average component loading on the second principal component equals zero, and adjust *object_scores_matrix2_reflected* accordingly

Output: - *component_loadings_matrix2_rotated* (loadings for all team1 members)

　　　　 - *object_scores_matrix2_rotated* (scores for all strategy items)

Example:

| component_loadings_matrix2_rotated | | |
|---|---|---|
| Team members | dimension 1 | dimension 2 |
| Memb1 | 0.9559 | 0.2395 |
| Memb2 | 0.3102 | -0.7521 |
| Memb3 | 0.0703 | 0.7635 |
| Memb4 | 0.7836 | 0.3716 |
| Memb5 | 0.3306 | 0.0212 |
| Memb6 | 0.5106 | -0.8088 |
| Memb7 | 0.9535 | 0.1652 |
| Average | | 0.0000 |

| object_scores_matrix2_rotated | | |
|---|---|---|
| Strategy items | dimension 1 | dimension 2 |
| Item1 | -0.5667 | 0.3811 |
| Item2 | -0.5123 | 0.0079 |
| Item3 | 0.4533 | 0.2952 |
| Item4 | 0.3141 | 0.3901 |
| Item5 | 0.3014 | -0.0034 |
| Item6 | 0.1083 | -0.68 |
| Item7 | -0.098 | -0.391 |

Step 11: Plot *component_loadings_matrix1_rotated* and *object_scores_matrix1_rotated* graphically in a 2-dimensional space, where *component_loadings_matrix1_rotated* provides vector coordinates, each vector representing a member of team1, and where *object_scores_matrix1_rotated* provides point coordinates, each point representing a strategy item

Output: *biplot1*

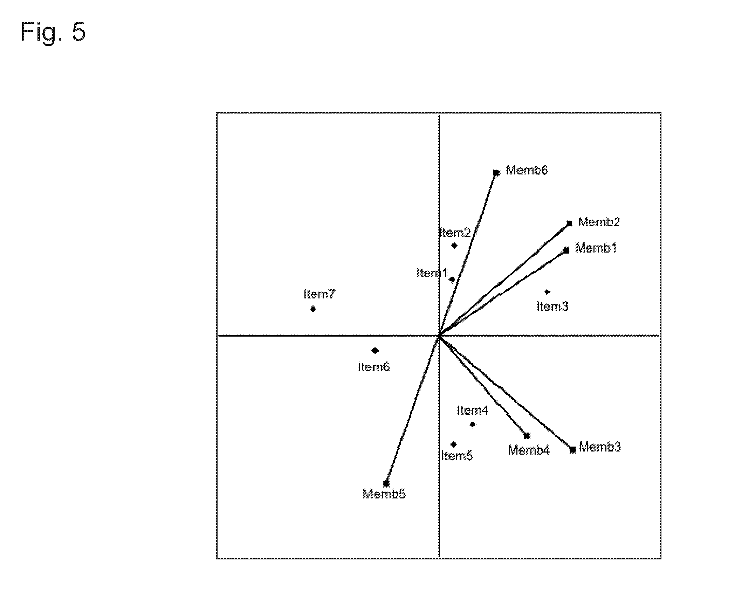

Fig. 5 shows *biplot1*.

Step 12: Plot *component_loadings_matrix2_rotated* and *object_scores_matrix2_rotated* graphically in a 2-dimensional space, where *component_loadings_matrix2_rotated* provides vector coordinates, each vector representing a member of team2 (Manuf1 =Memb1, etc.), and where *object_scores_matrix2_rotated* provides point coordinates, each point representing a strategy item

Output: *biplot2*

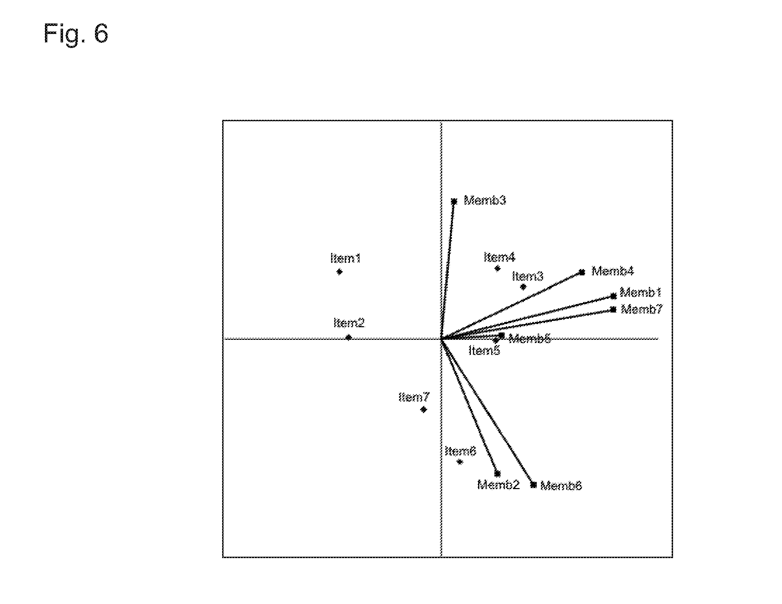

Fig.6 shows *biplot2.*

Step 13: Compute similarity measure from *component_loadings_matrix1_rotated*

Output: $\alpha_1$

Example: Value is 0,439046705

Step 14: Compute similarity measure from *component_loadings_matrix2_rotated*

Output: $\alpha_2$

Example: Value is 0,559224001

Step 15: Make orthogonal point projections in *biplot1* on the first principal component (i.e. the horizontal axis) and deduce object scores for prototypical_manager1; or: take object scores from the first column of *object_scores_matrix1_rotated* as the object scores for prototypical_manager1

Output: *prototypical manager1_object_scores*

Example:

| prototypical_manager1_object_scores | |
|---|---|
| Strategy items | Object scores |
| Item1 | 0.0760 |
| Item2 | 0.0868 |
| Item3 | 0.5988 |
| Item4 | 0.1870 |
| Item5 | 0.0794 |
| Item6 | -0.3428 |
| Item7 | -0.6851 |

Step 16: Make orthogonal point projections in *biplot2* on the first principal component (i.e. the horizontal axis) and deduce object scores for prototypical_manager2; or: take object scores from the first column of *object_scores_matrix2_rotated* as the object scores for prototypical_manager2

Output: *prototypical_manager2_object_scores*

Example:

| prototypical_manager2_object_scores | |
|---|---|
| Strategy items | Object scores |
| Item1 | -0.5667 |
| Item2 | -0.5123 |
| Item3 | 0.4533 |
| Item4 | 0.3141 |
| Item5 | 0.3014 |
| Item6 | 0.1083 |
| Item7 | -0.098 |

Step 17: Correlate *prototypical_manager1_object_scores* with *prototypical_manager2_object_scores* and compose 2*2 correlation matrix

Output: *correlation_matrix*

Example:

| correlation_matrix | | |
|---|---|---|
| | Team1 | Team2 |
| Team1 | 1 | 0.296658781 |
| Team2 | 0.296658781 | 1 |

Step 18: Compute 2-dimensional bubble coordinates for team1 and team2 from *correlation_matrix* (by applying MDS)

Output: *bubble_coordinates_matrix*

Example:

| bubble_coordinates_matrix | | |
|---|---|---|
| | dimension 1 | dimension 2 |
| Team1 | 0 | 0 |
| Team2 | 0.5573 | -0.2028 |

Step 19: Plot *bubble_coordinates_matrix* graphically in a 2-dimensional space, and let bubble coordinates form the epic center of a bubble with standardized size 1 Output: *bubble_plot*

Step 20: Take $\alpha$-values as filling rates for the corresponding bubbles of *bubble_plot* Output: *bubble_plot_$\alpha$_filled*

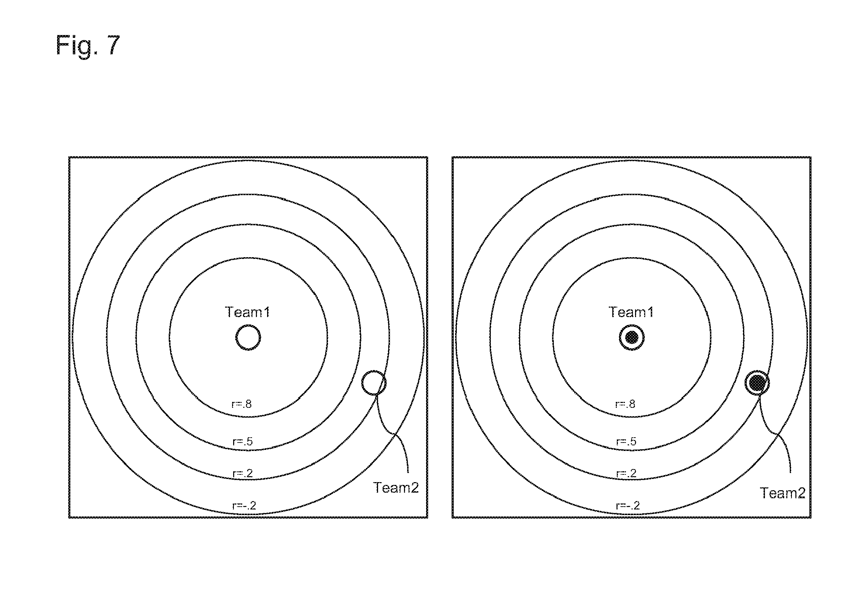

Fig. 7 shows the corresponding plot for *bubble_plot* (left) and *bubble_plot_$\alpha$_filled* (right).

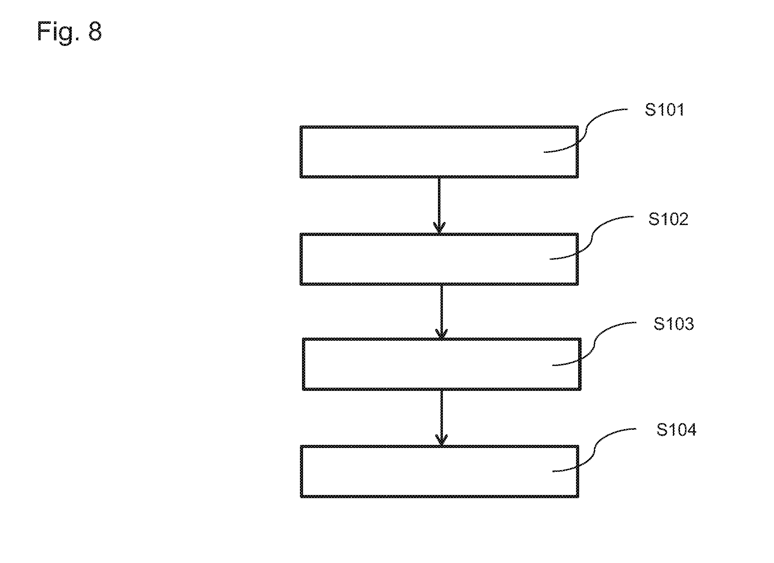

Fig. 8 shows a block diagram of the method comprising the steps of determining S101 a first similarity measure indicating a similarity of the digital values within the first data set; determining S102 a second similarity measure indicating a similarity of the digital values within the second data set; determining (S103) a correlation measure on the basis of the first data set and the second data set; and electronically outputting (S104) the correlation measure, the first similarity measure and the second similarity measure.

Instead to determine consensus the method can be applied for quality control purposes in manufacturing of products in different production facilities, e.g. like in manufacturing of screws in four different locations. A data set of digital values would consist of measurements of a sample of screws at a location on a limited amount of predetermined aspects (for example, length, width, weight, roughness, etc.). Data sets are sampled from different production facilities. The method outlined above is used to determine for each production facility a summary vector (an unobserved prototypical screw) that describes the peculiarities of the screw production in each manufacturing facility and shows the similarity measure within a production facility (how well the prototypical screw describe the sampled screws from the production facility) and the differences (of prototypical screws) between production facilities. In this way, the comparison of the quality of the screws within and between production facilities is very much facilitated.

The scope of the invention is given by the claims and not restricted by the description.

**Claims**

1. Method for characterizing a first data set of digital values and a second data set of digital values, the method comprising the steps:

   - determining (S101) a first similarity measure indicating a similarity of the digital values within the first data set;
   - determining (S102) a second similarity measure indicating a similarity of the digital values within the second data set;
   - determining (S103) a correlation measure on the basis of the first data set and the second data set; and
   - electronically outputting (S104) the correlation measure, the first similarity measure and the second similarity measure.

2. Method of claim 1, wherein the step of determining the first similarity measure comprises determining a first mean value of the digital values of the first data set, the first mean value forming the first similarity measure, or the step of determining the second similarity measure comprises determining a second mean value of the digital values of the second data set, the second mean value forming the second similarity measure.

3. Method according to one of the preceding claims, wherein the digital values of the first data set or the digital values of the second data set are represented as vectors.

4. Method according to claim 3, wherein the step of determining the first similarity measure comprises calculating a first vector sum of the vectors of the first data set, the first vector sum forming the first similarity measure, or the step of determining the second similarity measure comprises calculating a second vector sum of the vectors of the second data set, the second vector sum forming the second similarity measure.

5. Method according to claim 4, wherein the step of determining the first similarity measure comprises calculating a first magnitude of the first vector sum, the first magnitude forming the first similarity measure or the step of determining the second similarity measure comprises calculating a second magnitude of the second vector sum, the second vector sum forming the second similarity measure.

**6.** Method according to claim 5, wherein the step of determining the first similarity measure comprises dividing the first magnitude by the number of vectors in the first data set, the result forming the first similarity measure, or the step of determining the second similarity measure comprises dividing the second magnitude by the number of vectors in the second data set the result forming the second similarity measure.

**7.** Method according to one of the preceding claims, wherein the step of determining a correlation measure is further based on a summary vector of the first data set and a summary vector of the second data set.

**8.** Method according one of the preceding claims, wherein the step of electronically outputting comprises displaying a distance between the first data set and the second data on the basis of the correlation measure.

**9.** Method according one of the preceding claims, wherein the step of electronically outputting comprises multidimensional scaling.

**10.** Method according one of the preceding claims, wherein the step of electronically outputting comprises displaying a size of the first data set on the basis of the first similarity measure or displaying a size of the second data set on the basis of the second similarity measure.

**11.** Method according to one of the preceding claims, wherein the method comprises the step of reducing a number of data in the first data set or reducing a number of data in the second data set.

**12.** Method according to claim 11, wherein the step of reducing the number of data in the first data set or of reducing the number of data in the second data set comprises an unfolding method.

**13.** Method according to claim 12, wherein the unfolding method generates a set of object scores and a set of component loadings for each of the first and the second data sets and the steps of determining a first and a second similarity measure are based on the component loadings of each of the first and the second data set and the step of determining a correlation measure is based on the component scores of the first and the second data set.

**14.** Method according one of the preceding claims, wherein the method comprises the step of determining a third similarity measure indicating a similarity of the digital values within a third data set.

**15.** Method according to claim 14, wherein the method comprises the step of determining a correlation measure between the third data set of digital values and the first data set of digital values and a correlation measure between the third data set of digital values and the second data set of digital values.

Fig. 1

EP 2 775 427 A1

Fig. 2

Fig. 3

Fig. 4

Fig. 5

EP 2 775 427 A1

Fig. 6

Fig. 7

Fig. 8

| | Europäisches Patentamt<br>European Patent Office<br>Office européen des brevets | **EUROPEAN SEARCH REPORT** | Application Number<br>EP 13 15 8477 |
|---|---|---|---|

**DOCUMENTS CONSIDERED TO BE RELEVANT**

| Category | Citation of document with indication, where appropriate, of relevant passages | Relevant to claim | CLASSIFICATION OF THE APPLICATION (IPC) |
|---|---|---|---|
| X | WO 2013/003905 A1 (FRED BERGMAN HEALTHCARE PTY LTD [AU]; MASHINCHI MOHAMMAD HADI [AU]; BA) 10 January 2013 (2013-01-10)<br>* the whole document *<br>----- | 1-15 | INV.<br>G06Q10/00<br>G06Q40/00 |

**TECHNICAL FIELDS SEARCHED (IPC)**

G06Q

The present search report has been drawn up for all claims

| Place of search | Date of completion of the search | Examiner |
|---|---|---|
| Munich | 17 September 2013 | Lopes Margarido, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 15 8477

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2013

| Patent document cited in search report | Publication date | Patent family member(s) | Publication date |
|---|---|---|---|
| WO 2013003905 A1 | 10-01-2013 | AU 2012278931 A1<br>WO 2013003905 A1 | 02-05-2013<br>10-01-2013 |

EPO FORM P0459

For more details about this annex : see Official Journal of the European Patent Office, No. 12/82